# EUROPÄISCHE PATENTSCHRIFT

(11) **EP 3 227 096 B1**
(45) Veröffentlichungstag und Bekanntmachung des Hinweises auf die Patenterteilung: **03.07.2019**
(21) Anmeldenummer: 15790060.6
(22) Anmeldetag: 26.10.2015
(51) Int. Cl.: B29C 70/88, B29C 35/02, B29L 31/30

(54) **FASERVERBUNDWERKSTOFF, VERFAHREN ZUR HERSTELLUNG EINES VERBUNDBAUTEILS SOWIE DESSEN VERWENDUNG**
FIBER COMPOSITE MATERIAL, METHOD FOR MANUFACTURING A COMPOSITE COMPONENT, AND USE THEREOF
MATÉRIAU COMPOSITE FIBREUX, PROCÉDÉ DE FABRICATION D'UN ÉLÉMENT COMPOSITE ET UTILISATION DUDIT MATÉRIAU COMPOSITE FIBREUX

(30) Priorität: 01.12.2014 DE 102014224522
(43) Veröffentlichungstag der Anmeldung: 11.10.2017
(73) Patentinhaber: ThyssenKrupp Steel Europe AG, 47166 Duisburg (DE); thyssenkrupp AG, 45143 Essen (DE)
(72) Erfinder: KLAUKE, Peter, 58239 Schwerte (DE); KLEINSCHMIDT, Oliver, 44137 Dortmund (DE); LEWE, Tobias, 48147 Münster (DE)
(74) Vertreter: ThyssenKrupp Steel Europe AG
(86) Internationale Anmeldenummer: PCT/EP2015/074751
(87) Internationale Veröffentlichungsnummer: WO 2016/087127

(56) Entgegenhaltungen:
- EP-A1- 2 153 964
- WO-A1-00/13892
- WO-A1-02/30657
- DE-A1- 2 605 508
- DE-A1-102011 014 244
- DE-A1-102013 010 312
- US-A1- 2003 062 118

## Beschreibung

Die Erfindung betrifft einen vorimprägnierten Faserverbundwerkstoff umfassend mindestens eine oder mehrere Lagen flächenförmiger textiler Gebilde in Form von Geweben, Gewirken, Gestricke, Geflechten, Nähgewirken, Vliesstoffen oder Filzen aus anorganischen und organischen Fasern in einer Kunststoffmatrix , ein Verfahren zur Herstellung eines Faserverbundbauteils sowie dessen Verwendung.

Gattungsgemäße Faserverbundwerkstoffe sind im Stand der Technik bekannt. Beispielhaft ist in der deutschen Offenlegungsschrift 26 05 508 ein Gegenstand aus einem faserverstärkten Kunststoff offenbart, welcher aus einem mit Harz getränkten Fasergemisch aus Glasfaser und Stahlwolle gebildet ist und als Kunststoffkarosserieteil, insbesondere als Teil einer Motorhaube ausgebildet ist. Die Stahlwolle soll eine Abschirmung gegen elektromagnetische Störschwingungen, die beispielsweise vom Zündsystem des Verbrennungsmotors erzeugt werden, die sich störend auf den Rundfunkempfang auswirken können, übernehmen. Den wesentlichen Teil der Faserverstärkung hingegen übernimmt die Glasfaser.

In der deutschen Veröffentlichung 112010 001 365 ist ein Schichtkörper für ein Fahrzeugaußenhautverkleidungsmaterial offenbart, welcher aus einer Fasermatte besteht, bei dem anorganische Fasern und wärmebeständige organische Fasern mit einem Schmelzpunkt von 200°C oder mehr durch geschmolzene Verbindungsharzfasern miteinander verbunden sind, sowie eine Kunststofffolie, die an mindestens einer Oberfläche der Fasermatte einstückig aufkaschiert ist, wobei ein Teil der Kunststofffolie die Fasermatte durch Schmelzen imprägniert. Derartige Fahrzeugaußenhautverkleidungsmaterialien werden besonders für Fahrzeugunterböden verwendet, da sie gegen Steinschlag sehr widerstandsfähig sind. Als anorganische Fasern, deren Anteil in der Fasermatte zwischen 15 und 60 Gew.-% beträgt, werden vorzugsweise Glasfasern aufgrund der leichten Handhabungsfähigkeit eingesetzt, die in Abhängigkeit vom Gewichtsanteil Einfluss auf die mechanischen Festigkeiten des Fahrzeugaußenhautverkleidungsmaterials haben. Als wärmebeständige organische Fasern, deren Anteil in der Fasermatte zwischen 5 und 60 Gew.-% beträgt, werden vorzugsweise Polyethylenterephthalatfasern eingesetzt, die in Abhängigkeit des Gewichtsanteils Einfluss auf die Stoßfestigkeit des Fahrzeugaußenverkleidungsmaterials haben. Als Verbindungharzfasern, deren Anteil in der Fasermatte zwischen 10 und 40 Gew.-% beträgt, werden vorzugsweise Polypropylenfasern eingesetzt. Um eine Fasermatte zu erzeugen, werden die vorgenannten Fasern im Zuge einer Vernadelung miteinander verhakt. Mit einem anschließenden Aufkaschieren einer Kunststofffolie auf einer oder beiden Seiten der Fasermatte wird in einem Kaschierprozess durch Druck- und Wärmeeinwirkung eine Laminatbahn erzeugt und zusammengepresst, wobei Bestandteile aus der Kunststofffolie infolge der Erwärmung die Fasermatte imprägnieren und die Verbindungsharzfasern in der Fasermatte durch Aufschmelzen die anorganischen und wärmebeständigen organischen Fasern verbinden. Nimmt der ausgeübte Druck auf die Laminatbahn wieder ab, dehnt sich die Laminatbahn aufgrund der Rückverformungskraft der anorganischen Fasern in Dickenrichtung aus und innerhalb der Fasermatte entstehen Poren, deren Anteil zwischen 30 und 90 % betragen kann. Durch Abkühlen kann ein Schichtkörper mit geringem Gewicht im Zuge eines Warmformens zu einem Fahrzeugaußenverkleidungsmaterial hergestellt werden.

Dokument WO02/30657 offenbart ein Faserverbundwerkstoff (so genannte Web) umfassend mindestens eine Lage flächenförmiger textiler Gebilde in Form von Geweben, Gewirken, Gestricke, Geflechten, Nähgewirken, Vliesstoffen oder Filzen aus anorganischen und organischen Fasern wobei mindestens 40 Vol.-% an elektrisch, leitfähigen Fasern in dem Faserverbundwerkstoff enthalten sind.

Fahrzeuge, die mit Bauteilen, wie sie im Stand der Technik beschrieben sind, ausgestattet sind, können zwar zu einer Gewichtreduzierung und damit zu einer Reduzierung des Kraftstoffverbrauchs beitragen, jedoch lassen sich derartige Bauteile üblicherweise nur durch relativ teure Klebeverbindungen oder weiteren mechanischen Verbindungen, die beispielsweise eine separate Prozesstechnik erfordern, mit weiteren Komponenten im Fahrzeug verbinden. Ferner weisen die bekannten Faserverbundwerkstoffe kein Massepotential (Klemme 31) auf. Als typische elektrische Nichtleiter sind dann zusätzliche Rückleiter und aufwendige Verkabelungen erforderlich, welche zusätzlich verlegt werden müssen und sich negativ in Form einer Gewichtserhöhung auswirken.

Hiervon ausgehend ist es Aufgabe der vorliegenden Erfindung, einen Faserverbundwerkstoff vorzuschlagen, welcher die vorgenannten Nachteile überwindet, sowie ein kostengünstiges Verfahren zur Herstellung eines Verbundbauteils sowie dessen Verwendung anzugeben.

Die aufgezeigte Aufgabe für einen gattungsgemäßen Faserverbundwerkstoff wird dadurch gelöst, dass mindestens 40 Vol.-% an elektrisch, leitfähigen Fasern in dem Faserverbundwerkstoff enthalten sind, wobei als elektrisch leitende Fasern Aluminium-, Magnesium- und/oder Stahlfasern verwendet werden.

Es wurde festgestellt, dass elektrisch, leitfähige Fasern zumindest ein Massenpotential in einem Faserverbundwerkstoff bereitstellen und der Faserverbundwerkstoff somit bei geringerem Gewicht vergleichbare Eigenschaften wie ein metallisches Vollmaterial aufweist, wodurch auf zusätzliche Rückleiter und aufwendige Verkabelungen verzichtet werden kann. Der Anteil an elektrisch, leitfähigen Fasern in Form von Aluminium-, Magnesium- und/oder Stahlfasern in dem Faserverbundwerkstoff beträgt mindestens 40 Vol.-%, insbesondere mindestens 50 Vol.-%, vorzugsweise mindestens 60 Vol.-% und besonders bevorzugt mindestens 70 Vol.-%, wodurch der Faserverbundwerkstoff konventionell und kostengünstig mit weiteren Komponenten insbesondere auch widerstandsverschweißt werden kann.

Gemäß einer ersten Ausführung der Erfindung bestehen die anorganischen Fasern aus Metallwolle, die aufgrund ihrer elektrischen Leitfähigkeit als elektrisch, leitfähige Fasern im Faserverbundwerkstoff verwendet werden. Auch Hybridgarne, deren Kerne aus Metallfasern bestehen, können verwendet werden. Als elektrisch, leitfähige Fasern kommt vorzugsweise Stahlwolle in Frage. Stahl ist besonders bevorzugt, da der Werkstoff sehr elastisch ist und relativ günstig bezogen werden kann. Aufgrund der vorteilhaften magnetischen Eigenschaft von Stahl kann ein Transport/Transfer von Faserverbundwerkstoffen beispielsweise mittels Magnete relativ einfach umgesetzt werden. Der Anteil der anorganischen Fasern ist auf maximal 90 Vol.-%, insbesondere auf maximal 85 Vol.-% begrenzt, um noch einen Gewichtsvorteil im Vergleich zu einem in den Abmessungen vergleichbaren metallischen Vollmaterial aufzuweisen. Ein weiterer Gewichtsvorteil ist möglich, wenn beispielsweise Metallpulverfülldrähte verwendet werden, insbesondere mit einem Stahlwerkstoff als Hülle und Aluminiumpulver als Füllwerkstoff. Metallpulverfülldrähte sowie deren Herstellung sind für Schweißanwendungen im Stand der Technik bekannt, jedoch ist der Durchmesser durch Verwendung geeigneter Mittel entsprechend zu reduzieren, der sich im Wesentlichen an den Durchmesser von Stahlfasern respektive Stahlwolle orientiert.

Eine weitere Ausführung der Erfindung sieht vor, dass die organischen Fasern des Faserverbundwerkstoffes aus PA-, PP-, PE-, Regenarat-, Natur-, Aramid- (para-Aramid, meta-Aramid) Polyester- (HT), Viskose- (FR), PET-, Polycolon-, Melaminfasern, Thermoplast- oder deren Mischungen bestehen und/oder auch vollständig aus mindestens zwei oder mehreren unterschiedlichen Fasern in Form eines insbesondere schichtweise vereinigten Hybridgarns bestehen können. Naturfasern werden bevorzugt eingesetzt und können insbesondere in Verbindung mit Stahlfasern/Stahldrähten respektive Stahlwolle umweltfreundlich dem Stoffkreislauf wieder zugeführt werden, wodurch sich auch die Ökobilanz verbessert.

Eine weitere Ausführung der Erfindung sieht vor, dass die organischen und/oder anorganischen Fasern in Form von Hybridfasern verwendet werden, die insbesondere kostengünstig her- und bereitgestellt werden können.

Gemäß einer weiteren Ausführung der Erfindung ist der Faserverbundwerkstoff ein oder beidseitig mit einer Deckschicht versehen, die im Wesentlichen stoffschlüssig mit dem Faserverbundwerkstoff verbunden sein kann. Das Vorsehen einer Deckschicht kann beispielsweise Unebenheiten an der Oberfläche des Faserverbundwerkstoffes ausgleichen und das Erscheinungsbild verbessern.

Die Herstellung gattungsgemäßer Faserverbundwerkstoffe, insbesondere unter Einwirkung von Temperatur und/oder Druck, beispielsweise über Doppelbandpressen oder anderen geeigneten Kaschieranlagen, ist im Stand der Technik beschrieben. Alternativ können Faserverbundwerkstoffe auch belastungsgerecht hergestellt werden, beispielsweise individuell in der Faserorientierung über das sogenannte "Automated Fiber Placement (AFP) "eingestellt werden.

Ein weiterer Aspekt der Erfindung betrifft ein Verfahren zum Herstellen eines Faserverbundbauteils, wobei ein erfindungsgemäß vorkonsolidierter Faserverbundwerkstoff konduktiv und/oder induktiv auf eine Temperatur erwärmt und anschließend in einem formgebenden Werkzeug zu einem Faserverbundbauteil umgeformt wird. Alternativ kann der Faserverbundwerkstoff auch passiv erwärmt werden.

Durch die elektrisch, leitfähigen Fasern in dem Faserverbundwerkstoff kann auf die Nutzung von energie- und kostenintensiven Vorrichtungen zur Erwärmung, wie beispielsweise eine Erwärmung in Öfen, verzichtet werden und relativ kostengünstige, konduktive und/oder induktive Erwärmungsmittel können verwendet werden. Vorzugsweise wird der Faserverbundwerkstoff auf eine Temperatur, insbesondere auf Umformtemperatur erwärmt. Die Mittel zur konduktiven und/oder induktiven Erwärmung können beispielsweise im formgebenden Werkzeug integriert sein. Alternativ oder kumulativ können die Mittel zur konduktiven und/oder induktiven Erwärmung außerhalb des formgebenden Werkzeugs angeordnet sein, beispielsweise in einer Transfervorrichtung integriert sein, welche beispielsweise die insbesondere zugeschnittenen Faserverbundwerkstoffe von einem Stapel in das Werkzeug transferiert und dabei erwärmt. Dies kann insbesondere die Taktzeit erhöhen. Gemäß einer ersten Ausführung des erfindungsgemäßen Verfahrens wird die Kunststoffmatrix des Faserverbundbauteils in dem formgebenden Werkzeug ausgehärtet. Das Aushärten erfolgt im Wesentlichen unter Wärme und/oder Druck, wobei die Temperatur insbesondere höher gewählt wird als beispielsweise die Umformtemperatur. In vorteilhafterweise ist das formgebende Werkzeug mit Mitteln ausgestattet, die das Werkzeug temperieren.

Gemäß einem weiteren Aspekt betrifft die Erfindung die Verwendung eines nach dem erfindungsgemäßen Verfahren hergestellten Faserverbundbauteils. Insbesondere kommen großflächige Bauteile, wie beispielsweise Teile von Fahrzeugdächern, Türen oder Klappen in Betracht. Derartige Bauteile verfügen über ein Massepotential bei geringem Gewicht. Um Wiederholungen zu vermeiden, wird auf das Vorhergesagte verwiesen.

In einem ersten Ausführungsbeispiel wurde ein vorimprägnierter Faserverbundwerkstoff mit mehreren Schichten aus anorganischen und organischen Fasern in einer Kunststoffmatrix bereitgestellt, welcher beispielsweise über AFP hergestellt wurde. Als anorganische Fasern kamen Stahlfasern respektive Stahlwolle mit einem Anteil von 60 Vol.-% als elektrisch, leitfähige Fasern zum Einsatz. Die restlichen 40 Vol.-% waren Naturfasern. Als Kunststoffmatrix wurde ein Epoxidharz verwendet. Einer der zugeschnittenen vorimprägnierten Faserverbundwerkstoffe wurde von einem Stapel entnommen und in Richtung Werkzeug transferiert, beispielsweise mittels einer Handhabungsvorrichtung oder eines Roboters. An den Greifern der Transfervorrichtung waren Kontaktierungselemente integriert, die zum einen mit einer Stromquelle verbunden waren, zum anderen unmittelbar Kontakt zum Faserverbundwerkstoff hatten und aufgrund der sehr guten elektrischen Leitfähigkeit im Faserverbundwerkstoff durch Beaufschlagung eines Stromflusses, den Faserverbundwerkstoff, als Teil des Stromkreises, erwärmt wurde. Die Transfervorrichtung legte den erwärmten Faserverbundwerkstoff in ein offenes Werkzeug respektive Umformwerkzeug, das beispielsweise aus einem Unterwerkzeug (Matrize) und aus einem Oberwerkzeug (Stempel) besteht. Durch eine Relativbewegung der beiden Werkzeughälften wurde der warme Faserverbundwerkstoff zu einem Faserverbundbauteil umgeformt. Im Umformwerkzeug waren Temperierungsmittel integriert, die das Werkzeug auf eine voreingestellte Temperatur hielt, wobei diese ausreichend hoch gewählt wurde, um im geschlossenen Zustand (UT) des Werkzeugs, d. h. unter Temperatur und Druck das Epoxidharz aushärten zu können. Anschließend wurde das Werkzeug geöffnet und das fertig geformte Faserverbundbauteil entnommen.

In einem zweiten Ausführungsbeispiel wurde ein vorimprägnierter Faserverbundwerkstoff mit mehreren Lagen Hybridgarntextilgeweben bereitgestellt, welche auf einer Doppelbandpresse zu einem Organoblech verarbeitet wurde, wobei im Hybridgarn Stahlfasern zu 65 Vol.-% und Thermoplastfasern zu 35 Vol.-% vorzugsweise homogen vermischt waren und die Thermoplastfasern insbesondere endlos und unverstreckt waren. Der zugeschnittene Faserverbundwerkstoff wurde von einem Stapel entnommen und in Richtung Werkzeug transferiert, beispielsweise mittels einer Handhabungsvorrichtung oder eines Roboters. An der Transfervorrichtung war oberhalb der Greifer ein Induktor angeordnet, der zum einen mit einer Stromquelle verbunden war, zum anderen durch seine Anordnung ein sicheres Aufnehmen und Ablegen eines Faserverbundwerkstoff sichergestellt wurde. Aufgrund der ferromagnetischen Eigenschaften der Stahlfasern im Faserverbundwerkstoff konnte durch Beaufschlagung eines Stromes eine Erwärmung im Faserverbundwerkstoff durch Induktion bewirkt werden. Die Transfervorrichtung legte den erwärmten Faserverbundwerkstoff in ein offenes Werkzeug respektive Umformwerkzeug. Die weiteren Schritte erfolgten analog zum ersten Beispiel zur Herstellung eines fertig geformten und ausgehärteten Faserverbundbauteils.

Alternativ oder kumulativ können auch konduktive und/oder induktive Erwärmungsmittel in dem Umformwerkzeug integriert sein.

Die erfindungsgemäß hergestellten Faserverbundbauteile können insbesondere als Teil eines Kraftfahrzeugdaches aber auch für weitere großflächige Bauteile, wie beispielsweise Teile von Türen und Klappen im Fahrzeug verwendet werden. So werden Bauteile bereitgestellt, die ein Massepotential bei geringem Gewicht aufweisen und insbesondere widerstandsschweißgeeignet sind. Auch die Ökobilanz kann durch den Einsatz von wiederverwertbaren Werkstoffen positiv beeinflusst werden. Die Verwendung der erfindungsgemäß hergestellten Faserverbundbauteile ist nicht auf den Fahrzeugbau beschränkt, sondern kann auch in Bereichen eingesetzt werden, in denen ein Massepotential bei geringem Gewicht erforderlich ist, z. B. Luft- und Raumfahrt, Schiffbau.

## Patentansprüche

1. Vorimprägnierter Faserverbundwerkstoff umfassend mindestens eine oder mehrere Lagen flächenförmiger textiler Gebilde in Form von Geweben, Gewirken, Gestricke, Geflechten, Nähgewirken, Vliesstoffen oder Filzen aus anorganischen und organischen Fasern in einer Kunststoffmatrix,
**dadurch gekennzeichnet, dass**
mindestens 40 Vol.-% an elektrisch, leitfähigen Fasern in dem Faserverbundwerkstoff enthalten sind, wobei als elektrisch leitende Fasern Aluminium-, Magnesium- und/oder Stahlfasern verwendet werden.

2. Faserverbundwerkstoff nach Anspruch 1,
**dadurch gekennzeichnet, dass**
die anorganischen Fasern aus Metallwolle bestehen.

3. Faserverbundwerkstoff nach einem der Ansprüche 1 oder 2,
**dadurch gekennzeichnet, dass**
die organischen Fasern aus Natur-, Regenerat-, Aramid-, Polyester-, Viskose-, Polycon-, Melamin-, PET-, PP-, PE- und/oder PA-Fasern bestehen.

4. Faserverbundwerkstoff nach einem der vorgenannten Ansprüche,
**dadurch gekennzeichnet, dass**
die anorganischen und/oder organischen Fasern in Form von Hybridfasern verwendet werden.

5. Faserverbundwerkstoff nach einem der vorgenannten Ansprüche,
**dadurch gekennzeichnet, dass**
der Faserverbundwerkstoff ein oder beidseitig mit einer Deckschicht versehen ist.

6. Verfahren zum Herstellen eines Faserverbundbauteils, **gekennzeichnet durch** die Verwendung eines Faserverbundwerkstoffs nach einem der Ansprüche 1 bis 5, wobei der Faserverbundwerkstoff konduktiv und/oder induktiv auf Umformtemperatur erwärmt und anschließend in einem formgebenden Werkzeug zu einem Faserverbundbauteil umgeformt wird.

7. Verfahren nach Anspruch 6,
**dadurch gekennzeichnet, dass**
die Kunststoffmatrix des Faserverbundbauteils in dem formgebenden Werkzeug ausgehärtet wird.

8. Verwendung eines nach Anspruch 6 oder 7 hergestellten Faserverbundbauteils als Teil eines Fahrzeugdaches, einer Tür oder einer Klappe.

## Claims

1. Preimpregnated fibrous composite engineering material comprising, at least, one or more plies of sheetlike textile constructs in the form of wovens, knits, braids, stitch bondeds, nonwovens or felts of organic and inorganic fibers in a polymeric matrix, **characterized in that** the fibrous composite engineering material comprises not less than 40% by volume of electrically conductive fibers, wherein fibers of aluminum, of magnesium and/or of steel are used as electrically conducting fibers.

2. Fibrous composite engineering material according to Claim 1, **characterized in that** the inorganic fibers consist of metal wool.

3. Fibrous composite engineering material according to either of Claims 1 and 2, **characterized in that** the organic fibers consist of natural, regenerated, aramid, polyester, viscose, Polycon, melamine, PET, PP, PE and/or PA fibers.

4. Fibrous composite engineering material according to any preceding claim, **characterized in that** the organic and/or inorganic fibers are used in the form of hybrid fibers.

5. Fibrous composite engineering material according to any preceding claim, **characterized in that** the fibrous composite engineering material is one- or both-sidedly provided a covering layer.

6. Method of manufacturing a fibrous composite component part, **characterized by** the step of using a fibrous composite engineering material according to any of Claims 1 to 5, wherein the fibrous composite engineering material is conductively and/or inductively heated to a molding temperature and is subsequently molded in a mold into a fibrous composite component part.

7. Method according to Claim 6, **characterized in that** the polymeric matrix of the fibrous composite component part is cured in the mold.

8. Method of using a fibrous composite component part manufactured according to Claim 6 or 7 as part of a vehicle roof, of a door or of a lid.

## Revendications

1. Matériau composite fibreux pré-imprégné comprenant au moins une ou plusieurs couches de structures textiles plates sous la forme de tissus, de tricots, de nappes, de tissus par couture-tricotage, de non-tissés ou de feutres à base de fibres inorganiques et organiques dans une matrice de matière plastique, **caractérisé en ce qu'**au moins 40 % en volume de fibres électriquement conductrices sont contenues dans le matériau composite fibreux, des fibres d'aluminium, de magnésium et/ou d'acier étant utilisées en tant que fibres électriquement conductrices.

2. Matériau composite fibreux selon la revendication 1, **caractérisé en ce que** les fibres inorganiques sont constituées par de la laine métallique.

3. Matériau composite fibreux selon l'une quelconque des revendications 1 ou 2, **caractérisé en ce que** les fibres organiques sont constituées par des fibres naturelles, régénérées, d'aramide, de polyester, de viscose, de polycon, de mélamine, de PET, de PP, de PE et/ou de PA.

4. Matériau composite fibreux selon l'une quelconque des revendications précédentes, **caractérisé en ce que** les fibres inorganiques et/ou organiques sont utilisées sous la forme de fibres hybrides.

5. Matériau composite fibreux selon l'une quelconque des revendications précédentes, **caractérisé en ce que** le matériau composite fibreux est muni d'une couche de recouvrement sur un des ou les deux côtés.

6. Procédé de fabrication d'un composant composite fibreux, **caractérisé par** l'utilisation d'un matériau composite fibreux selon l'une quelconque des revendications 1 à 5, le matériau composite fibreux étant porté par conduction et/ou par induction à la température de déformation, puis déformé dans un outil de façonnage en un composant composite fibreux.

7. Procédé selon la revendication 6, **caractérisé en ce que** la matrice de matière plastique du composant composite fibreux est durcie dans l'outil de façonnage.

8. Utilisation d'un composant composite fibreux fabriqué selon la revendication 6 ou 7 en tant que partie d'un toit de véhicule, d'une porte ou d'un couvercle.
